# EUROPÄISCHE PATENTSCHRIFT

(11) **EP 1 209 065 B1**
(45) Veröffentlichungstag und Bekanntmachung des Hinweises auf die Patenterteilung: **20.08.2003**
(21) Anmeldenummer: 01126337.3
(22) Anmeldetag: 07.11.2001
(51) Int. Cl.: B62D 25/08

(54) **Bodenteil eines Kraftfahrzeugladeraumes**
Floor element for a motor vehicle luggage compartment
Elément de sol pour le coffre d'un véhicule automobile

(30) Priorität: 23.11.2000 DE 10058016
(43) Veröffentlichungstag der Anmeldung: 29.05.2002
(73) Patentinhaber: DaimlerChrysler AG, 70567 Stuttgart (DE)
(72) Erfinder: Colmsee, Harald, 71093 Weil im Schönbuch (DE); Kost, Renate, 21299 Wimsheim (DE)

(56) Entgegenhaltungen:
- DE-A- 4 138 371
- PATENT ABSTRACTS OF JAPAN vol. 1999, no. 09, 30. Juli 1999 (1999-07-30) -& JP 11 115820 A (MAZDA MOTOR CORP), 27. April 1999 (1999-04-27)
- PATENT ABSTRACTS OF JAPAN vol. 1999, no. 03, 31. März 1999 (1999-03-31) -& JP 10 316050 A (NISSAN MOTOR CO LTD), 2. Dezember 1998 (1998-12-02)

## Beschreibung

Die Erfindung betrifft ein Bodenteil eines Laderaumes für ein Kraftfahrzeug, insbesondere Personenkraftwagen, mit einer nach oben offenen Mulde, wobei in einer Seitenwand der Mulde eine zur Mulde offene Ausbuchtung vorgesehen ist. Dokument JP 11 115 820 A offenbart ein solches Bodenteil.

Ein derartiges Bodenteil ist z.B. aus der DE 41 38 371 A1 bekannt und zeigt ein Bodenteil eines Kofferraumbodens eines Personenkraftwagens, in dem eine nach oben offene Ersatzradmulde ausgebildet ist. Ein derartiges Bodenteil wird üblicherweise als Tiefziehteil und vorzugsweise aus Stahlblech hergestellt. Tiefziehteile sind aufgrund des Herstellungsprozesses bezüglich ihrer Raumform nicht beliebig gestaltbar; beispielsweise können Hinterschnitte nicht realisiert werden. Dementsprechend befindet sich in der Muldenöffnung regelmäßig der größte Querschnitt der Mulde, wodurch die Einbaumöglichkeiten des Bodenteils begrenzt sind. Um beispielsweise bei einem Heckaufprall mit relativ niedriger Geschwindigkeit hohe Reparaturkosten zu vermeiden, sollte die Heckmulde so im Laderaum positioniert sein, daß Träger, die sich bei diesem Heckaufprall verformen, nicht mit der Mulde kollidieren. Dementsprechend muß die Mulde dann oberhalb oder unterhalb oder mit einem hinreichend großen Abstand zu.diesen Trägern im Laderaum positioniert werden. Der hierzu erforderliche Bauraum steht jedoch nicht immer zur Verfügung.

Die vorliegende Erfindung beschäftigt sich mit dem Problem, für ein Bodenteil der eingangs genannten Art eine Konstruktion vorzuschlagen, die auch bei schwierigen Einbausituationen verwendbar ist.

Dieses Problem wird erfindungsgemäß durch ein Bodenteil mit den Merkmalen des Anspruchs 1 gelöst.

Die Erfindung beruht auf dem allgemeinen Gedanken, die Mulde in zwei Abschnitte zu unterteilen, die jeweils in einem anderen Bestandteil des Bodenteils ausgebildet sind, die separat voneinander herstellbar sind und zum Bodenteil zusammengebaut werden, wobei sich erst bei zusammengebautem Bodenteil die Muldenabschnitte zur Mulde vereinen. Durch diese Bauweise ergeben sich neue Gestaltungsmöglichkeiten für die Mulde; beispielsweise kann die Mulde unterhalb ihrer Muldenöffnung einen größeren Querschnitt besitzen als in der Muldenöffnung. Ebenso ist es möglich, die Mulde so zu gestalten, daß sie Hinterschnitte aufweist, wobei die Einzelteile des Bodenteils insbesondere auch als Tiefziehteile herstellbar sind.

Beim erfindungsgemäßen Bodenteil wird das eine Einzelteil durch ein Einsatzteil gebildet, in dem eine Ausbuchtung der Mulde ausgebildet ist. Das andere Einzelteil des Bodenteils wird durch ein Trägerteil gebildet, das eine Seitenwand mit einer Aufnahmeöffnung enthält, in welche das Einsatzteil so eingesetzt wird, daß die Ausbuchung zur Mulde offen ist. Die Ausbuchtung und die Aufnahmeöffnung können sich dabei über einen mehr oder weniger großen Abschnitt der Seitenwand erstrecken.

Bei einer bevorzugten Ausführungsform ist die Ausbuchtung unterhalb der Muldenöffnung angeordnet, wodurch sich ein Hinterschnitt in der Mulde ausbildet.

Bei einer anderen Ausführungsform kann ein den Öffnungsrand der Aufnahmeöffnung bildender Abschnitt der Seitenwand in einer Ebene liegen. Durch diese Maßnahme wird eine Trennebene als Schnittstelle zwischen den beiden Einzelteilen des Bodenteils gebildet, wodurch sich die Befestigung der beiden Einzelteile aneinander vereinfacht.

Bei einer besonderen Ausführungsform kann die Ausbuchtung so angeordnet sein, daß auf einer von der Mulde abgewandten Außenseite der Seitenwand, oberhalb des Einsatzteils und unterhalb einer die Muldenöffnung enthaltenden Oberseite des Bodenteils ein Freiraum ausgebildet ist. Dieser Freiraum kann bei der Positionierung des Bodenteils vorteilhaft zur Durchführung eines Trägers verwendet werden, wobei außerdem ein hinreichender Abstand zum Träger gewährleistet werden kann. Durch diese Bauweise erstreckt sich die Ausbuchtung der Mulde bis unterhalb dieses Trägers, so daß eine optimale Ausnutzung des nur Verfügung stehenden Bauraumes erzielt werden kann.

Das der Erfindung zugrundeliegende Problem wird auch durch ein Verfahren mit den Merkmalen des Anspruchs 9 gelöst. Durch die aufgezeigte Vorgehensweise ist es möglich, das Bodenteil auch bei beengten Einbauverhältnissen zu montieren. Insbesondere kann bei montiertem Trägerteil und noch nicht angebautem Einsatzteil die Aufnahmeöffnung als Montageöffnung benutzt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine perspektivische Ansicht auf ein Bodenteil nach der Erfindung und
- Fig. 2: einen Schnitt durch das Bodenteil entsprechend den Schnittlinien II in Fig. 1.

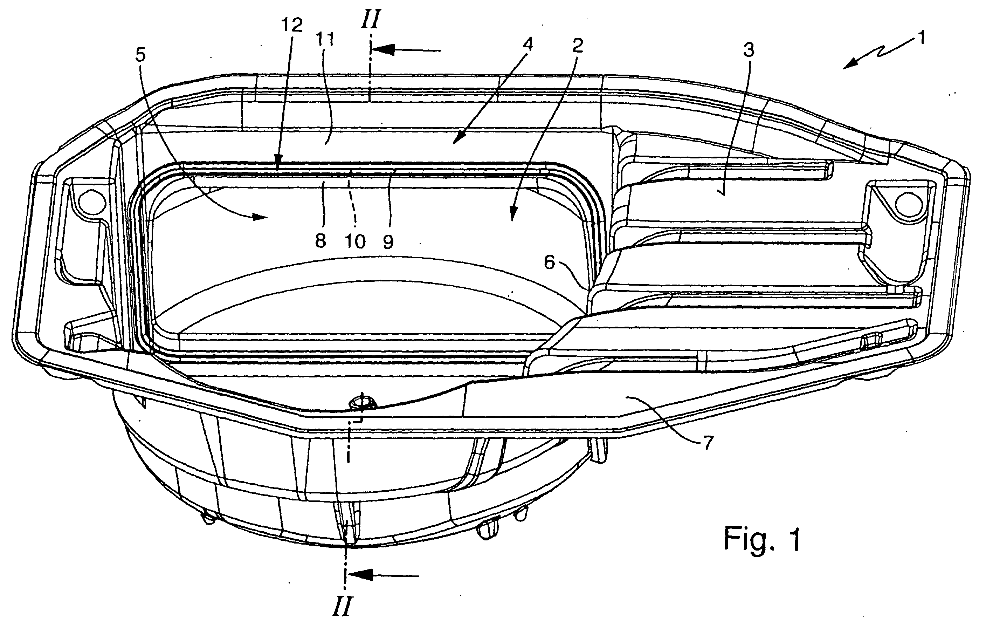

Entsprechend Fig. 1 weist ein erfindungsgemäßes Bodenteil 1 eine Mulde 2 auf, die sich von einer Oberseite 3 des Bodenteils 1 nach unten erstreckt und dementsprechend nach oben offen ist. Ein derartiges Bodenteil 1 bildet einen Bestandteil eines im übrigen dargestellten Laderaumes bei einem Kraftfahrzeug, insbesondere im Heck eines Personenkraftwagens. Bei der hier dargestellten Ausführungsform handelt es sich um eine Mulde 2, die zur Unterbringung eines Reserverades des Fahrzeuges dient.

In der Mulde 2 ist in einer Seitenwand 4 der Mulde 2 eine Ausbuchtung 5 vorgesehen, die sich von der Mulde 2 weg, also nach außen erstreckt. Diese Ausbuchtung 5 ist zur Mulde 2 hin offen und bildet dadurch eine Vergrößerung der Mulde 2. Beachtenswert ist hierbei, daß eine Muldenöffnung 6 den Querschnitt eines Kreisabschnittes aufweist, der als solcher grundsätzlich nicht geeignet ist, um darin ein Reserverad unterzubringen. Unterhalb der Muldenöffnung 6 wird der Querschnitt der Mulde 2 durch den Querschnitt der Ausbuchtung 5 erweitert, wobei sich ein im wesentlichen kreisförmiger Gesamtquerschnitt ergibt, in dem das Reserverad untergebracht werden kann. Dementsprechend bildet die Ausbuchtung 5 unterhalb der Muldenöffnung 6 einen Hinterschnitt im Bodenteil 1.

Das Bodenteil 1 ist zumindest aus zwei Einzelteilen, nämlich aus einem Trägerteil 7 und einem Einsatzteil 8, zusammengebaut. Das Einsatzteil 8 ist schalenförmig ausgebildet und umfaßt im wesentlichen die Ausbuchtung 5. Das Trägerteil 7 enthält zumindest die Seitenwand 4 der Mulde 2. Bei der hier dargestellten Ausführungsform ist im Trägerteil 7 mit Ausnahme der Ausbuchtung 5 die komplette Mulde 2 ausgeformt. In der Seitenwand 4 ist eine Aufnahmeöffnung 9 ausgespart, in die das Einsatzteil 8 eingesetzt ist. Die Aufnahmeöffnung 9 ist dabei unterhalb der Muldenöffnung 6 angeordnet, so daß ein Öffnungsrand 10 die Aufnahmeöffnung 9 vollständig einfaßt. Dieser Öffnungsrand 10 ist dabei an einem Abschnitt 11 der Seitenwand 4 ausgebildet, der bei der hier dargestellten speziellen Ausführungsform in einer Ebene liegt. Durch diese Bauweise vereinfacht sich die Herstellung der Aufnahmeöffnung 9 und die Anbringung des Einsatzteils 8 am Trägerteil 7.

Das Einsatzteil 8 ist an einem der Aufnahmeöffnung 9 zugewandten Ende mit einem seitlich abstehenden, umlaufenden Kragen 12 ausgestattet, der den Öffnungsrand 10 der Aufnahmeöffnung 9 überlappt. Dementsprechend wird für die Montage des Einsatzeils 8 am Trägerteil 7 dieses durch die Mulde 2 in die Aufnahmeöffnung 9 eingesetzt. Die Befestigung des Einsatzteils 8 am Trägerteil 7 kann beispielsweise durch eine Klebverbindung, Lötverbindung, Schweißverbindung oder Nietverbindung des Kragens 12 mit dem den Öffnungsrand 10 aufweisenden Abschnitt 11 der Seitenwand 4 erfolgen.

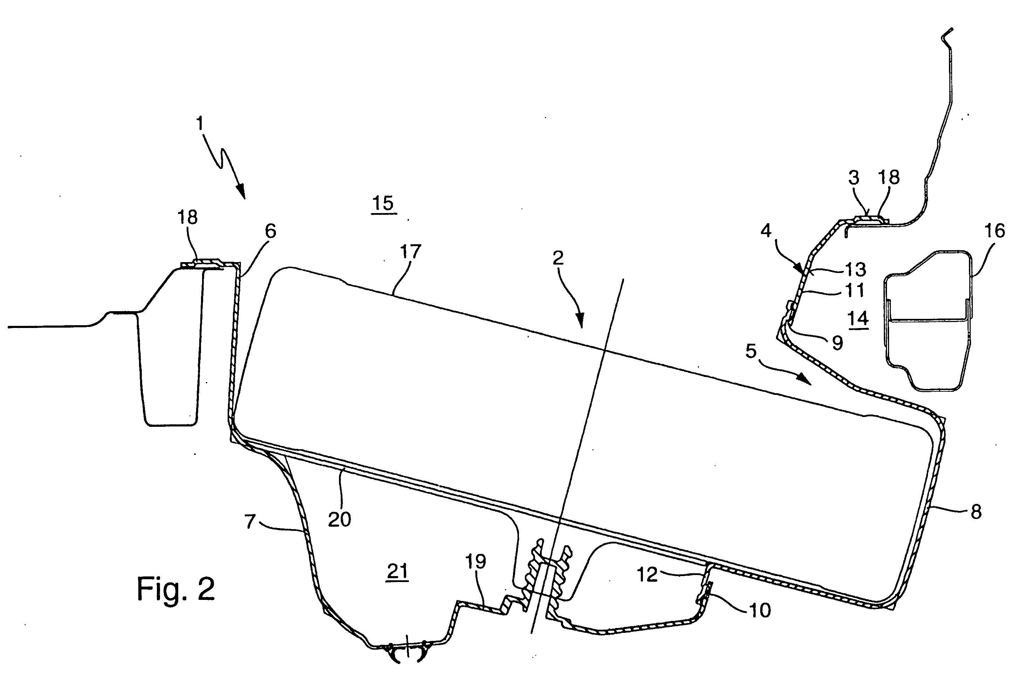

Entsprechend Fig. 2 kann die Ausbuchtung 5 innerhalb der Mulde 2 so weit unterhalb der Oberseite 3 des Bodenteils 1 angeordnet sein, daß sich vor einer von der Mulde 2 abgewandten Außenseite 13 der Seitenwand 4 und unterhalb der Oberseite 3 des Bodenteils 1 sowie oberhalb des Einsatzteils 8 ein Freiraum 14 ausbildet. Durch die gezielte Anordnung der Ausbuchtung 5 kann dieser Freiraum 14 so dimensioniert werden, daß bei in einem Laderaum 15 montiertem Bodenteil 1 ein Träger 16 des Fahrzeugs sich durch diesen Freiraum 14 erstreckt. Der Träger 16 kann beispielsweise ein Biegeträger einer Heckstoßfängerbaugruppe sein. Vorzugsweise ist außerdem ein hinreichend großer Abstand zwischen dem Träger 16 und dem Bodenteil 1 vorhanden, so daß auch eine Verformung des Trägers 16, die beispielsweise bei einem Heckaufprall bei einer relativ kleinen Geschwindigkeit auftreten kann, kein schädlicher Kontakt zwischen dem Träger 16 und dem Bodenteil 1 auftritt. Die anfallenden Reparaturkosten sind dann relativ niedrig.

Bei der Darstellung gemäß Fig. 2 ist in der Mulde 2 ein Reserverad 17 untergebracht, wobei das Reserverad 17 teilweise in die Ausbuchtung 5 eindringt. Dabei wird deutlich, daß der Öffnungsquerschnitt der Muldenöffnung 6 deutlich kleiner ist als der Kreisquerschnitt des Reservereifens 17, so daß das erfindungsgemäße Bodenteil 1 den vorhandenen Stauraum offensichtlich besser ausnutzen kann als ein herkömmliches Bodenteil, dessen Mulde 2 auch im Bereich der Muldenöffnung 6 einen Querschnitt besitzt, der größer ist als der Kreisquerschnitt des Ersatzrades 17.

Das Trägerteil 7 und das Einsatzteil 8 lassen sich besonders einfach durch ein Tiefziehverfahren herstellen. Vorzugweise bestehen sowohl Einsatzteil 8 als auch Trägerteil 7 aus Blech, insbesondere Stahlblech, Aluminiumblech oder verstärktem Kunststoff.

Der Zusammenbau des Bodenteils 1 erfolgt vorzugsweise wie folgt:

Zunächst werden das Trägerteil 7 und das Einsatzteil 8 unabhängig voneinander hergestellt. Sofern das Trägerteil 7 mit einem Tiefziehverfahren hergestellt wird, muß nach dem Tiefziehen die Aufnahmeöffnung 9 in die Seitenwand 4 eingebracht werden. Dies kann beispielsweise durch einen entsprechenden Stanzvorgang erfolgen.

Das so vorbereitete Trägerteil 7 wird in den dafür vorgesehenen Abschnitt des Laderaums 15 in ein Fahrzeug eingebaut. Ein umlaufender Außenrand 18 des Trägerteils 7 überlappt dabei einen im Laderaumboden vorgesehenen Öffnungsrand und dient zur Befestigung des Trägerteils 7 am Fahrzeug. Nach montiertem Trägerteil 7 kann die Aufnahmeöffnung im Bedarfsfall als Montageöffnung dienen. Wenn die Aufnahmeöffnung 9 nicht oder nicht mehr als Montageöffnung gebraucht wird, kann das Einsatzteil 8 von der Mulde 2 her in die Aufnahmeöffnung 9 eingesetzt werden. Der Kragen 12 wird mit dem Öffnungsrand 10 verbunden. Das Bodenteil 1 ist dann zusammengebaut, wobei die Mulde 2 des Trägerteils 7 und die Ausbuchtung 5 des Einsatzteils 8 nun einen zusammemhängenden, nach außen abgeschlossenen Aufnahmeraum für das Ersatzrad 17 bilden.

An einem Boden 19 der Mulde 2 ist hier noch eine Bodenplatte 20 angebracht, die einen zusätzlichen Stauraum 21 abdeckt, der sich unterhalb des Ersatzrades 17 befindet. Die Bodenplatte 20 dient dabei gleichzeitig als Auflage für das Reserverad 17. Bemerkenswert ist außerdem, daß das Reserverad 17 in der Mulde 2 gegenüber dem Laderaumboden geneigt untergebracht ist.

## Patentansprüche

1. Bodenteil eines Laderaumes für ein Kraftfahrzeug, insbesondere Personenkraftwagen, mit einer nach oben offenen Mulde (2),
wobei in einer Seitenwand (4) der Mulde (2) eine zur Mulde (2) offene Ausbuchtung (5) vorgesehen ist,
**dadurch gekennzeichnet,**
**daß** das Bodenteil (1) zumindest aus einem Einsatzteil (8) und aus einem Trägerteil (7) zusammengebaut ist,
**daß** die Ausbuchtung (5) im Einsatzteil (8) ausgebildet ist, daß das Trägerteil (7) die Seitenwand (4) enthält,
**daß** in der Seitenwand (4) eine Aufnahmeöffnung (9) ausgebildet ist,
**daß** das Einsatzteil (8) in die Aufnahmeöffnung (9) des Trägerteils (7) eingesetzt und am Trägerteil (7) befestigt ist.

2. Bodenteil nach Anspruch 1,
**dadurch gekennzeichnet,**
**daß** die Ausbuchtung (5) unterhalb einer Muldenöffnung (6) angeordnet ist.

3. Bodenteil nach Anspruch 1 oder 2,
**dadurch gekennzeichnet,**
**daß** die Aufnahmeöffnung (9) von ihrem Öffnungsrand (10) vollständig eingefaßt ist, wobei der Öffnungsrand (10) durch einen Abschnitt (11) der Seitenwand (4) gebildet ist.

4. Bodenteil nach einem der Ansprüche 1 bis 3,
**dadurch gekennzeichnet,**
**daß** ein den Öffnungsrand (10) der Aufnahmeöffnung (9) bildender Abschnitt (11) der Seitenwand (4) in einer Ebene liegt.

5. Bodenteil nach einem der Ansprüche 1 bis 4,
**dadurch gekennzeichnet,**
**daß** die Ausbuchtung (5) so angeordnet ist, daß an einer von der Mulde (2) abgewandten Außenseite (13) der Seitenwand (4), oberhalb des Einsatzteils (8) und unterhalb einer die Muldenöffnung (6) enthaltenden Oberseite (3) des Bodenteils (1) ein Freiraum (14) ausgebildet ist.

6. Bodenteil nach einem der Ansprüche 1 bis 5,
**dadurch gekennzeichnet,**
**daß** die Mulde (2) zur Aufnahme eines Reserverades (17) ausgebildet ist, wobei ein Teil des Reserverades (17) in die Ausbuchtung (5) eindringt.

7. Bodenteil nach einem der Ansprüche 1 bis 6,
**dadurch gekennzeichnet,**
**daß** das Einsatzteil (8) und/oder das Trägerteil (7) als Tiefziehteil ausgebildet ist.

8. Bodenteil nach einem der Ansprüche 1 bis 7,
**dadurch gekennzeichnet,**
**daß** das Einsatzteil (8) und/oder das Trägerteil (7) aus Kunststoff, insbesondere verstärktem Kunststoff, oder aus Blech, z.B. Stahlblech oder Aluminiumblech, hergestellt ist.

9. Verfahren zum Zusammenbau eines Bodenteils (1) nach einem der Ansprüche 1 bis 8,
**dadurch gekennzeichnet,**
**daß** zunächst das Trägerteil (7) in einen Abschnitt des Laderaumbodens (15) eines Kraftfahrzeuges eingesetzt und daran befestigt wird und erst danach das Einsatzteil (8) in die Aufnahmeöffnung (9) eingesetzt und am Trägerteil (7) befestigt wird.

## Claims

1. Floor part of a loading compartment of a motor vehicle, in particular a passenger car, with a well (2) which is open at the top, a bulge (5) being provided in a side wall (4) of the well (2) and opening into the well (2),
**characterised in that**
the floor part (1) comprises at least one insert part (8) and a support part (7),
the bulge (5) is disposed in the insert part (8),
the support part (7) contains the side wall (4),
a seating orifice (9) is provided in the side wall (4),
the insert part (8) is placed in the seating orifice (9) of the support part (7) and fixed to the support part (7).

2. Floor part as claimed in claim 1,
**characterised in that**
the bulge (5) is disposed underneath a bulge opening (6).

3. Floor part as claimed in claim 1 or 2,
**characterised in that**
the seating orifice (9) is completely surrounded by its orifice rim (10), the orifice rim (10) being formed by a section (11) of the side wall (4).

4. Floor part as claimed in one of claims 1 to 3,
**characterised in that**
a section (11) of the side wall (4) forming the orifice rim (10) of the seating orifice (9) is disposed in a plane.

5. Floor part as claimed in one of claims 1 to 4,
**characterised in that**
the bulge (5) is disposed so that a free space (14) is left on an external face (13) of the side wall (4) remote from the well (2) above the insert part (8) and underneath a top face (3) of the floor part (1) containing the bulge opening (6).

6. Floor part as claimed in one of claims 1 to 5,
**characterised in that**
the well (2) is used for receiving a spare wheel (17) and a part of the spare wheel (17) extends into the bulge (5).

7. Floor part as claimed in one of claims 1 to 6,
**characterised in that**
the insert part (8) and/or the support part (7) is a deep-drawn part.

8. Floor part as claimed in one of claims 1 to 7,
**characterised in that**
the insert part (8) and/or the support part (7) are made from plastics, in particular reinforced plastics, or from sheet metal, e.g. sheet steel or aluminium sheet.

9. Method of assembling a floor part (1) as claimed in one of claims 1 to 8,
**characterised in that**
the support part (7) is firstly placed in a section of the loading compartment floor (15) of a motor vehicle and secured thereto and only then is the insert part (8) inserted in the seating orifice (9) and secured to te support part (7).

## Revendications

1. Élément de fond d'un compartiment de chargement pour un véhicule automobile, en particulier pour un véhicule de tourisme, comprenant une cavité (2) ouverte vers le haut, une courbure (5) ouverte vers la cavité (2) étant prévue dans une paroi latérale (4) de la cavité (2), **caractérisé en ce que** l'élément de fond (1) est formé au moins par une partie à insérer (8) et une partie de support (7), **en ce que** la courbure (5) est réalisée dans la partie à insérer (8), **en ce que** la partie de support (7) comporte la paroi latérale (4), **en ce qu'**une ouverture de réception (9) est réalisée dans la paroi latérale (4), **en ce que** la partie à insérer (8) est posée dans l'ouverture de réception (9) de la partie de support (7) et est fixée contre la partie de support (7).

2. Élément de fond selon la revendication 1, **caractérisé en ce que** la courbure (5) est disposée en dessous d'une ouverture de la cavité (6).

3. Élément de fond selon la revendication 1 ou 2, **caractérisé en ce que** l'ouverture de réception (9) est intégralement entourée par un bord (10), le bord de l'ouverture (10) étant formé par une partie (11) de la paroi latérale (4).

4. Élément de fond selon l'une quelconque des revendications 1 à 3, **caractérisé en ce qu'**une partie (11) de la paroi latérale (4), formant le bord (10) de l'ouverture de réception (9), est disposée dans un plan.

5. Élément de fond selon l'une quelconque des revendications 1 à 4, **caractérisé en ce que** la courbure (5) est disposée de telle sorte qu'un espace libre (14) se forme au niveau d'une face extérieure (13) de la paroi latérale (4), opposée à la cavité (2), au-dessus de la partie à insérer (8) et en dessous d'une face supérieure (3) de l'élément de fond (1), munie de l'ouverture de cavité (6).

6. Élément de fond selon l'une quelconque des revendications 1 à 5, **caractérisé en ce que** la cavité (2) est conçue pour recevoir une roue de secours (17), une partie de la roue de secours (17) s'engageant dans la courbure (5).

7. Élément de fond selon l'une quelconque des revendications 1 à 6, **caractérisé en ce que** la partie à insérer (8) et/ou la partie de support (7) sont des parties formées par emboutissage profond de fond.

8. Élément de fond selon l'une quelconque des revendications 1 à 7, **caractérisé en ce que** la partie à insérer (8) et/ou la partie de support (7) sont réalisées en matière plastique, en particulier en matière plastique renforcée, ou en tôle, telle qu'une tôle d'acier ou une tôle d'aluminium.

9. Procédé de montage d'un élément de fond (1) selon l'une quelconque des revendications 1 à 8, **caractérisé en ce que**, tout d'abord, la partie de support (7) est introduite dans une partie de l'élément de fond du compartiment de chargement (15) d'un véhicule automobile et est fixée contre ledit élément de fond et, ensuite seulement, la partie à insérer (8) est posée dans l'ouverture de réception (9) et est fixée contre la partie de support (7).
